(19) Europäisches Patentamt
European Patent Office
Office européen des brevets

(11) **EP 3 378 083 B1**

(12) **FASCICULE DE BREVET EUROPEEN**

(45) Date de publication et mention
de la délivrance du brevet:
**13.11.2019 Bulletin 2019/46**

(21) Numéro de dépôt: **16815876.4**

(22) Date de dépôt: **16.11.2016**

(51) Int Cl.:
***H01H 33/59*** *(2006.01)*

(86) Numéro de dépôt international:
**PCT/FR2016/052971**

(87) Numéro de publication internationale:
**WO 2017/085402 (26.05.2017 Gazette 2017/21)**

(54) **DISJONCTEUR POUR UN RÉSEAU À COURANT CONTINU HAUTE TENSION, AVEC OSCILLATION FORCÉE DE COURANT**

TRENNSCHALTER FÜR EIN HOCHSPANNUNGSGLEICHSTROMNETZ MIT ERZWUNGENER STROMSCHWINGUNG

CIRCUIT BREAKER FOR A HIGH-VOLTAGE DC NETWORK, WITH FORCED OSCILLATION OF CURRENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2015 FR 1561022**

(43) Date de publication de la demande:
**26.09.2018 Bulletin 2018/39**

(73) Titulaire: **Supergrid Institute**
**69100 Villeurbanne (FR)**

(72) Inventeurs:
• **CREUSOT, Christophe**
  **01120 Pizay (FR)**
• **GIRODET, Alain**
  **69680 Chassieu (FR)**
• **MERMET GUYENNET, Michel**
  **01130 Belleydoux (FR)**
• **BERTINATO, Alberto**
  **69003 Lyon (FR)**

(74) Mandataire: **Cabinet Beau de Loménie**
  **51 avenue Jean Jaurès**
  **BP 7073**
  **69301 Lyon Cedex 07 (FR)**

(56) Documents cités:
**EP-A1- 2 569 794    WO-A1-2012/100831**

**Description**

La présente invention concerne le domaine technique général des disjoncteurs conçus pour autoriser notamment une ouverture en charge du circuit électrique dans lequel ils sont interposés et elle vise plus précisément un disjoncteur pour un réseau à courant continu haute ou moyenne tension, avec injection forcée d'un courant oscillant.

L'objet de l'invention trouve des applications particulièrement avantageuses dans le domaine technique de la protection des réseaux multipoints à courant continu haute tension (HVDC, acronyme pour en anglais, High Voltage Direct Current) ou à courant continu moyenne tension (MVDC, acronyme pour en anglais, Medium Voltage Direct Current). Le disjoncteur selon l'invention permet de protéger un tel réseau ainsi que les convertisseurs de courant alternatif/continu associés, lorsqu'un défaut apparaît dans un tel réseau.

Avec le développement des réseaux à courant continu et des réseaux multipoints à courant continu basés sur des convertisseurs à courant continu, les disjoncteurs à courant continu sont devenus des éléments clés permettant de garantir un fonctionnement stable, sécurisé et fiable.

Dans les réseaux alternatifs, il existe deux points de passage par zéro dans un cycle du courant alternatif de sorte qu'un disjoncteur pour courant alternatif utilise le passage naturel par zéro du courant afin de l'interrompre. Dans un réseau continu, il n'existe pas de passage naturel par zéro pour le courant continu de sorte que l'interruption du courant est plus complexe.

Dans l'état de la technique des réseaux continus, il est connu, d'utiliser un système électronique de puissance à base d'IGBT pour interrompre directement un courant continu de défaut. Si de tels systèmes permettent de couper de façon rapide le courant, cette solution présente un coût prohibitif et, en fonctionnement normal, des pertes importantes de conduction.

Il est également connu une autre solution dite « hybride » ou « mécatronique » comportant d'une part dans la branche primaire, un dispositif électronique de puissance connecté en série à un sectionneur mécanique ultra rapide et d'autre part, en parallèle, un dispositif d'électronique de puissance. Lors de l'apparition d'un défaut, le dispositif d'électronique de puissance de la branche primaire coupe le courant et le sectionneur mécanique s'ouvre. Le courant est commuté dans la branche parallèle qui élimine le défaut. Cette solution présente l'avantage de réduire les pertes de conduction et de présenter une très grande vitesse d'interruption. Cependant, cette solution impose de monter en série et en parallèle, plusieurs dispositifs nécessitant un contrôle complexe.

Il est également connu par la demande de brevet WO 2012/100831, un disjoncteur pour un réseau HVDC comportant une branche avec un disjoncteur mécanique inséré dans la ligne du réseau et en parallèle de laquelle sont montés d'une part, une branche à parafoudre, et d'autre part, en série, un enclencheur, une inductance et un condensateur pré chargé à une tension négative. L'enclencheur assure lors de l'apparition d'un courant de défaut, le transfert du courant dans la branche du condensateur afin de réduire jusqu'à arrêter la circulation du courant dans la branche du disjoncteur mécanique.

Il est également connu une autre solution mettant en œuvre un disjoncteur mécanique qui permet d'éliminer un courant de défaut lorsque ce dernier présente des passages par zéro. Or, comme dans un réseau à courant continu, le courant de défaut ne présente pas de passages par zéro, un tel disjoncteur mécanique est associé à un circuit d'injection d'un courant oscillant de manière que le courant de défaut puisse présenter artificiellement un passage par zéro. Typiquement, en parallèle du disjoncteur mécanique sont montés en série, un premier banc de condensateurs, un enclencheur et une inductance. L'enclencheur assure lors de l'apparition d'un courant de défaut, la décharge à travers l'inductance, du banc de condensateurs afin de produire un passage par zéro du courant circulant dans la branche du disjoncteur mécanique.

Selon la variante de réalisation décrite dans la publication AORC Technical Meeting 2014, B4-1120, Mitsubishi, « HVDC breakers for HVDC grid applications », une source alternative de courant est utilisée pour charger le banc de condensateurs. Aussi, cette solution est coûteuse car elle nécessite d'utiliser une source auxiliaire et un enclencheur (piles de thyristors ou de transistors bipolaires à grille isolée ou éclateur commandé à plasma) travaillant à la tension du réseau.

De même, la publication IEEE Transactions on Power Apparatus Systems, Hitachi, 1985 « Development and interrupting tests on 250 kV 8kA HVDC circuit breaker » propose que le banc de condensateurs soit chargé par le réseau, à la tension du réseau de sorte que l'enclencheur travaille également à la tension du réseau.

La demande de brevet CN 10333785 qui ne décrit pas le circuit de charge du banc de condensateurs, prévoit d'utiliser plusieurs dispositifs électroniques de puissance avec un contrôle de commande, utilisés pour travailler aussi à la tension du réseau.

La présente invention vise à remédier aux inconvénients énoncés ci-dessus en proposant un disjoncteur pour un réseau à courant continu haute ou moyenne tension, mettant en œuvre un disjoncteur mécanique associé à un circuit d'injection d'un courant oscillant, un tel disjoncteur étant conçu pour ne pas nécessiter l'utilisation d'une source de tension auxiliaire tout en n'imposant pas aux différents composants électroniques de travailler à la tension du réseau.

Pour atteindre un tel objectif, le disjoncteur pour un réseau à courant continu haute ou moyenne tension, comporte une branche avec un disjoncteur mécanique inséré dans la ligne du réseau et en parallèle de laquelle sont montés d'une part, une branche à parafoudre, et d'autre part, en série, un premier banc de condensateurs, un enclencheur et une inductance, l'enclencheur assurant lors de l'apparition d'un courant de défaut, la décharge à travers l'inductance, du banc de condensateurs afin de produire un passage par zéro du courant circulant dans la branche du disjoncteur mécanique.

Selon l'invention, le disjoncteur comporte au moins un premier diviseur résistif de tension relié à la tension du réseau et présentant un étage basse tension connecté en parallèle avec le banc de condensateurs pour charger le banc de condensateurs.

Le disjoncteur selon l'invention comporte en outre en combinaison l'une et/ou l'autre des caractéristiques suivantes :

- le premier diviseur résistif de tension présente avec le banc de condensateurs, une constante de temps de charge inférieure à 100 ms ;
- le premier diviseur résistif de tension présente un ratio entre l'étage haute tension et l'étage basse tension compris entre 0,05 et 0,25 ;
- un deuxième diviseur résistif de tension relié à la tension du réseau et présentant un étage basse tension connecté en parallèle avec le banc de condensateurs, la résistance électrique de l'étage basse tension du premier diviseur étant inférieure à la résistance électrique de l'étage basse tension du deuxième diviseur avec le ratio de division du premier diviseur résistif de tension étant égal au ratio du deuxième diviseur résistif de tension, les étages du premier diviseur comportant des interrupteurs commandés d'une part, en fermeture pour assurer la charge rapide du banc de condensateurs et d'autre part, en ouverture après chargement, afin que le deuxième diviseur assure le maintien de la charge du banc de condensateurs ;
- une branche avec un deuxième banc de condensateurs connectée en parallèle avec l'étage basse tension du premier diviseur résistif de tension et présentant une capacité électrique identique à celle du premier banc de condensateur, les premier et deuxième bancs de condensateurs étant chacun montés en série avec un interrupteur dont l'un est commandé en fermeture pour décharger le banc de condensateurs associé afin de produire un passage par zéro du courant circulant dans la branche du disjoncteur mécanique, lors de l'apparition d'un courant de défaut et dont l'autre interrupteur est commandé en fermeture pour décharger le banc de condensateurs associé afin de produire un passage par zéro du courant circulant dans la branche du disjoncteur mécanique, en cas de réenclenchement sur défaut ;
- un système pour décharger le banc de condensateurs, après la suppression du courant de défaut ;
- en tant que système pour décharger le banc de condensateurs, les interrupteurs du premier diviseur résistif et l'étage haute tension de ce premier diviseur, ces interrupteurs étant commandés en fermeture pour assurer la décharge du banc de condensateurs ;
- un circuit de commande de l'enclencheur et du commutateur assurant d'une part, après l'ouverture du disjoncteur mécanique, la fermeture rapide de l'enclencheur pour assurer la production du courant oscillant, et d'autre part, l'ouverture du commutateur afin de réinitialiser la charge du banc de condensateurs pour être prêt pour une opération de coupure ultérieure.

Diverses autres caractéristiques ressortent de la description faite ci-dessous en référence aux dessins annexés qui montrent, à titre d'exemples non limitatifs, des formes de réalisation de l'objet de l'invention.

La **Figure 1** est un schéma de principe du disjoncteur conforme à l'invention.

La **Figure 2** est un schéma d'une première variante de réalisation du disjoncteur conforme à l'invention, comportant deux diviseurs résistifs de tension.

La **Figure 3A** est un schéma montrant l'étape de chargement du banc de condensateurs du disjoncteur illustré à la **Fig. 2.**

La **Figure 3B** illustre la forme de la tension de charge du banc de condensateurs du disjoncteur, à l'étape de la **Fig. 3A** et la forme du courant circulant dans la ligne réseau.

La **Figure 4A** est un schéma du disjoncteur montrant l'étape de maintien du chargement du banc de condensateurs.

La **Figure 4B** illustre la forme de la tension de charge du banc de condensateurs du disjoncteur, à l'étape de la **Fig. 4A.**

La **Figure 5A** est un schéma montrant le disjoncteur lors de l'apparition d'un courant de défaut.

La **Figure 5B** illustre la forme du courant réseau lors de l'apparition d'un courant de défaut et la forme de la tension de charge du banc de condensateurs.

La **Figure 6A** est un schéma du disjoncteur montrant l'étape d'ouverture du disjoncteur mécanique du disjoncteur.

La **Figure 6B** illustre la forme du courant réseau lors de l'apparition d'un courant de défaut et la forme de la tension de charge du banc de condensateurs.

La **Figure 7A** est un schéma du disjoncteur montrant l'étape de déchargement du banc de condensateurs pour créer un courant oscillant.

La **Figure 7B** illustre en relation de l'étape de déchargement illustrée à la **Fig. 7A,** la forme du courant réseau et la forme de la tension de charge du banc de condensateurs.

La **Figure 8A** est un schéma du disjoncteur montrant la première phase de décharge du banc de condensateurs pour permettre sa réinitialisation.

La **Figure 8B** illustre, en relation de l'étape de décharge illustrée à la **Fig. 8A,** la forme de la tension du banc de condensateurs.

La **Figure 9A** est un schéma du disjoncteur montrant la deuxième phase de décharge du banc de condensateurs pour permettre sa réinitialisation.

La **Figure 9B** illustre en relation de l'étape de décharge illustrée à la Fig. 9A, la forme de la tension du banc de condensateurs.

La **Figure 10** est un schéma d'une deuxième variante de réalisation du disjoncteur conforme à l'invention, comportant deux bancs de condensateurs.

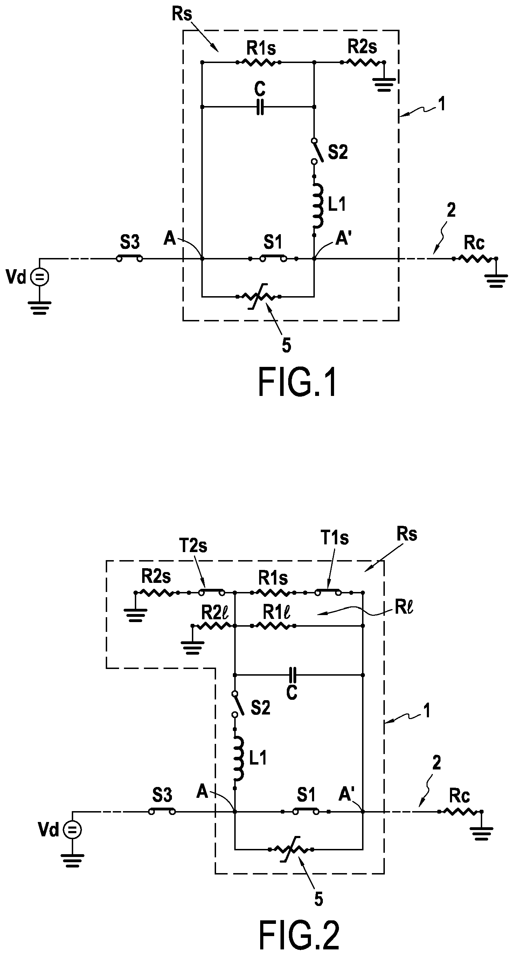

Tel que cela ressort des dessins et notamment de la **Fig. 1**, l'objet de l'invention concerne un disjoncteur **1** pour un réseau à courant continu **2** haute ou moyenne tension, avec injection forcée d'un courant oscillant. Le disjoncteur **1** selon l'invention permet de protéger un tel réseau ainsi que les convertisseurs de courant alternatif/continu associés, lorsqu'apparaît un défaut dans un tel réseau. Typiquement, un tel disjoncteur **1** est placé entre la sortie continue d'un tel convertisseur et le réseau à courant continu. Sur les dessins, le réseau à courant continu **2** est schématisé par une ligne sur laquelle est inséré, entre les points **A** et **A'**, le disjoncteur **1**, et comporte d'un côté, une résistance de charge **Rc** et de l'autre côté, une source à courant continu **Vd.**

Le disjoncteur **1** conforme à l'invention comporte une branche **A-A'** avec un disjoncteur mécanique **S1** inséré dans la ligne du réseau à courant continu **2**. Par disjoncteur mécanique **S1**, il est compris un appareil où les organes actifs de coupure sont enfermés dans une enceinte étanche emplie d'un fluide isolant ou au contraire d'un vide poussé inférieur à $10^{-5}$ mbar. Un tel fluide peut être un gaz, couramment mais non exclusivement de l'hexafluorure de soufre ($SF_6$), mais des liquides ou des huiles sont aussi utilisés. Ce milieu d'isolation et de coupure est choisi pour son caractère isolant, notamment de manière à présenter une rigidité diélectrique supérieure à celle de l'air sec à pression équivalente et également pour sa capacité de coupure de courant.

En parallèle de cette branche **A-A'** sont montés en série, un premier banc de condensateurs **C**, un enclencheur **S2** et une inductance **L1**. L'enclencheur **S2** est piloté en ouverture et fermeture par un circuit de commande non représenté, pour assurer lors de l'apparition d'un courant de défaut, la décharge à travers l'inductance, du banc de condensateurs **C** afin de produire un passage par zéro du courant circulant dans la branche du disjoncteur mécanique **S1**.

Le disjoncteur **1** conforme à l'invention est conçu pour permettre la charge du banc de condensateurs **C**, par le convertisseur de courant alternatif/continu ou comme dans l'exemple illustré à la **Fig. 1** par la ligne haute tension, à travers au moins un premier diviseur résistif de tension **Rs**. Ce diviseur comporte un étage basse tension **R1s** connecté en parallèle au banc de condensateurs **C** et un étage haute tension **R2s.** En choisissant le ratio de division de ce diviseur résistif de tension, il est possible de travailler avec une tension de charge du banc de quelques dizaines de kV, ce qui augmente sa durée de vie (au lieu de travailler en permanence à la tension du réseau i.e. 320 kVdc). Dans ce schéma, l'enclencheur **S2** travaille à une tension réduite qui est celle de la tension de charge du banc de condensateurs, ce qui le rend accessible à un faible coût pour un éclateur commandé ou pour une pile de thyristors ou de transistors bipolaires à grille isolée (ou IGBT acronyme en anglais).

En amont du disjoncteur **1** entre la source à courant continu et le point **A**, est inséré en série avec lui, un commutateur **S3**, utile pour décharger le banc de condensateurs **C** comme cela sera expliqué dans la suite de la description.

Selon une caractéristique avantageuse de réalisation, le premier diviseur résistif de tension **Rs** présente un ratio de division entre l'étage haute tension **R2s** et l'étage basse tension **R1s** compris entre 0,05 et 0,25. Typiquement, la résistance électrique de l'étage haute tension **R2s** est comprise entre 1.5 Mohms et 10 Mohms et la résistance électrique de l'étage basse tension **R1s** est comprise entre 0.1 Mohm et 2.5 Mohms.

Enfin, encore en parallèle de cette branche **A-A'** est montée une branche à parafoudre **5**. Cette branche comporte un parafoudre **5** c'est-à-dire un dispositif contre les surtensions de tous types connus en soi. Ce parafoudre **5** est implanté pour permettre de fixer la surtension maximale aux bornes du banc de condensateur **C** et du disjoncteur mécanique **S1** et d'absorber l'énergie du réseau après la coupure par le disjoncteur mécanique **S1**.

La **Fig. 2** illustre une première variante de réalisation d'un disjoncteur 1 conforme à l'invention comportant un premier diviseur résistif de tension **Rs** relié à la tension du réseau et un deuxième diviseur résistif de tension **Rl** relié également à la tension du réseau. Le premier diviseur résistif de tension **Rs** est utilisé pour assurer la charge rapide du banc de condensateurs **C**, en présentant des pertes élevées sur une très courte durée. Le deuxième diviseur résistif de tension **Rl** est utilisé pour prendre le relais du premier diviseur résistif de tension en assurant le maintien permanent de la charge du banc de condensateurs **C** tout en présentant des pertes permanentes faibles.

Le premier diviseur résistif de tension **Rs** présente avec le banc de condensateurs **C**, une constante de temps de charge inférieure à 100 ms.

Le premier diviseur résistif de tension **Rs** comporte un étage basse tension **R1s** et un étage haute tension **R2s**. L'étage basse tension **R1s** est connecté en parallèle avec le banc de condensateurs **C** pour charger le banc de condensateurs. Cet étage basse tension **R1s** comporte en série, un interrupteur commandé **T1s** dont la fonction sera décrite en détail dans la suite de la description. L'étage haute tension **R2s** est relié à la masse électrique et comporte en série, un interrupteur commandé **T2s** dont la fonction sera décrite en détail dans la suite de la description. Ces interrupteurs **T1s, T2s** sont commandés en ouverture et fermeture à l'aide du circuit de commande associé au disjoncteur **1**.

Le deuxième diviseur résistif de tension **Rl** comporte un étage basse tension **R1l** et un étage haute tension **R2l**. L'étage basse tension **R1l** est connecté en parallèle avec le banc de condensateurs **C** pour charger le banc de condensateurs. L'étage haute tension **R2l** est relié à la masse électrique.

Selon une caractéristique avantageuse de réalisation, la résistance électrique de l'étage basse tension **R1s** du premier diviseur résistif de tension **Rs** est inférieure à la résistance électrique de l'étage basse tension **R1l** du deuxième diviseur résistif de tension **Rl**. Selon une autre caractéristique avantageuse de réalisation, le ratio de division du premier diviseur résistif de tension **Rs** est égal au ratio du deuxième diviseur résistif de tension **Rl**. Comme déjà indiqué, le ratio de division de chaque diviseur résistif de tension **Rs** et **Rl** est compris entre 0,05 et 0,25. Typiquement, pour le premier diviseur résistif de tension **Rs**, la résistance électrique de l'étage basse tension **R1s** est comprise entre 1 kohm et 100 kohms et la résistance électrique de l'étage haute tension **R2s** est comprise entre 20 kohms et 400 kohms.

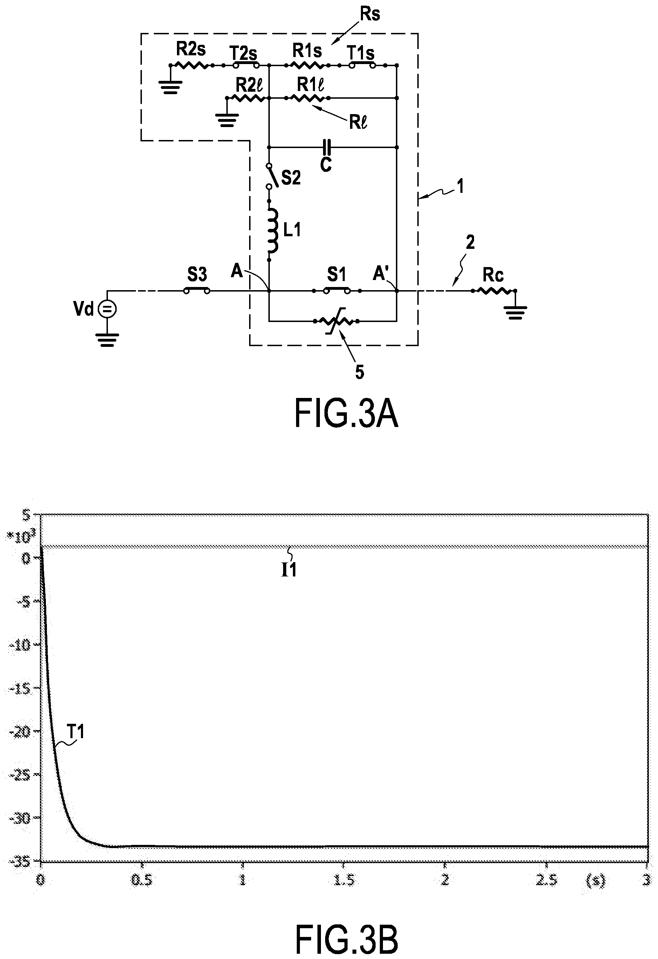

Les **Fig. 3A-3B** à **9A-9B** illustrent les principales étapes de fonctionnement du disjoncteur **1** illustré à la **Fig. 2**.

La première étape illustrée aux **Fig. 3A-3B** concerne la charge rapide du banc de condensateurs **C**. A cet effet, le disjoncteur mécanique **S1** est fermé et l'enclencheur **S2** est ouvert. Il est à noter que le commutateur **S3** inséré en série avec le disjoncteur **1** est fermé. Les interrupteurs commandés **T1s** et **T2s** du premier diviseur résistif de tension **Rs** sont fermés afin d'assurer la charge rapide du banc de condensateurs **C** à l'aide du premier diviseur résistif de tension **Rs**. La forme de la tension de charge du banc de condensateurs **C** est illustrée par la courbe **T1** de la **Fig. 3B** qui montre également la forme du courant circulant dans la ligne réseau c'est-à-dire dans le disjoncteur mécanique **S1** (courbe **I1**).

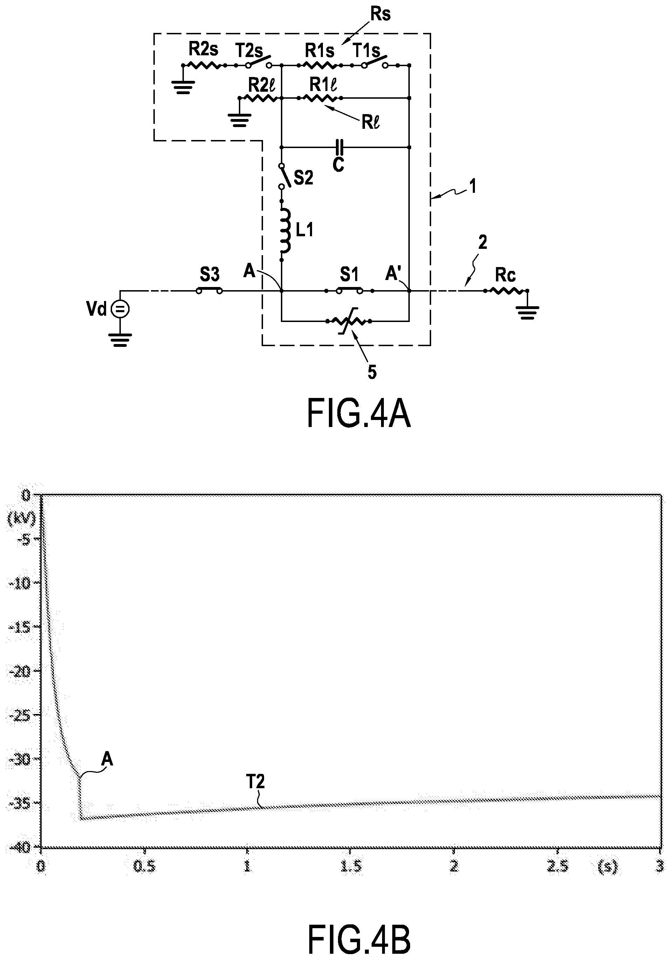

La deuxième étape illustrée aux **Fig. 4A-4B** concerne le maintien de de la charge du banc de condensateurs **C**, à une valeur permanente en présentant des pertes faibles. A cet effet, les interrupteurs commandés **T1s** et **T2s** du premier diviseur résistif de tension **Rs** sont ouverts tandis que le disjoncteur mécanique **S1** reste fermé et l'enclencheur **S2** reste ouvert. Il est à noter que le commutateur **S3** inséré en série avec le disjoncteur **1** est fermé.

Ces interrupteurs **T1s** et **T2s** sont commandés en ouverture pour permettre de déconnecter le premier diviseur résistif de tension **Rs** et de connecter le deuxième diviseur résistif de tension **Rl** aux bornes du banc de condensateurs **C**. Ces interrupteurs **T1s** et **T2s** sont commandés en ouverture avant que le banc de condensateurs n'atteigne sa pleine charge, de sorte que la fin de la charge du banc de condensateurs **C** est réalisée à l'aide du deuxième diviseur résistif de tension **Rl.** La forme de la tension de charge du banc de condensateurs **C** est illustrée par la courbe **T2** de la **Fig. 4B** qui montre au point **A**, la transition de charge entre le premier diviseur résistif de tension **Rs** et le deuxième diviseur résistif de tension **Rl**. Le deuxième diviseur résistif de tension **Rl** maintient ainsi de façon permanente, la charge du banc de condensateurs **C** en présentant des pertes permanentes faibles.

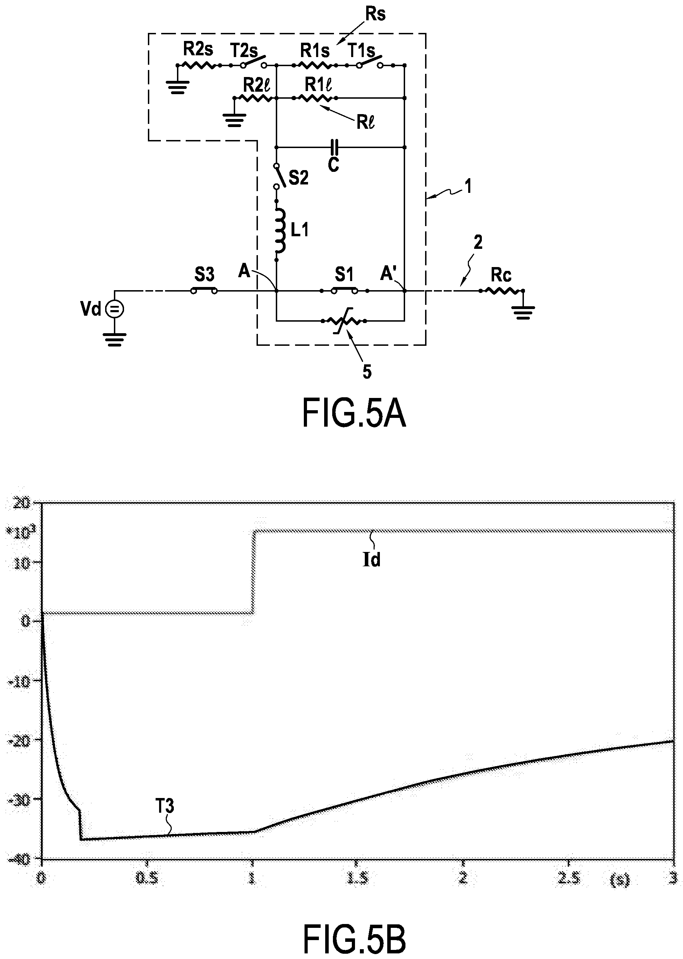

L'étape suivante illustrée aux **Fig. 5A-5B** illustre l'apparition d'un courant de défaut **Id** sur la ligne du réseau. L'apparition de ce courant de défaut conduit à une diminution de la capacité électrique du banc de condensateurs comme cela apparaît sur la courbe **T3** de la **Fig. 5B** montrant la courbe de charge du banc de condensateurs. Il est à noter que l'étage haute tension **R2l** qui présente une valeur importance de résistance est adapté pour limiter la décharge du banc de condensateurs lors de l'apparition de ce courant de défaut.

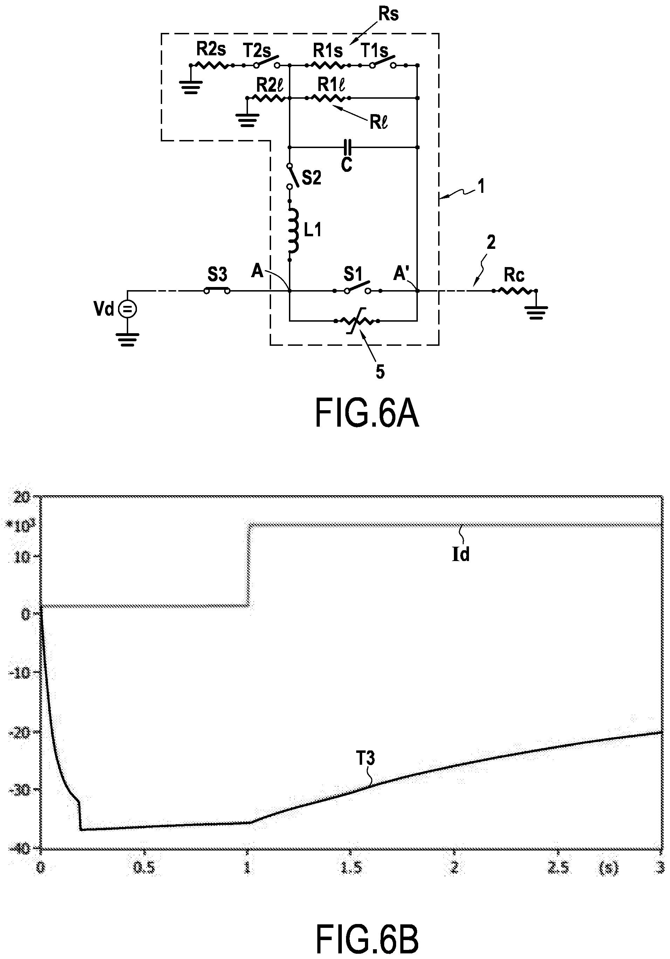

Après l'apparition du courant de défaut, le disjoncteur mécanique **S1** est commandé en ouverture comme illustré aux **Fig. 6A-6B,** par un ordre de commande provenant d'un circuit de protection. Classiquement, un arc électrique apparaît au sein du disjoncteur mécanique **S1**. Comme expliqué ci-dessus, le banc de condensateurs n'écoule pas instantanément sa charge dès l'apparition du courant de défaut, en raison de la grande valeur de la résistance de l'étage haute tension **R2l**.

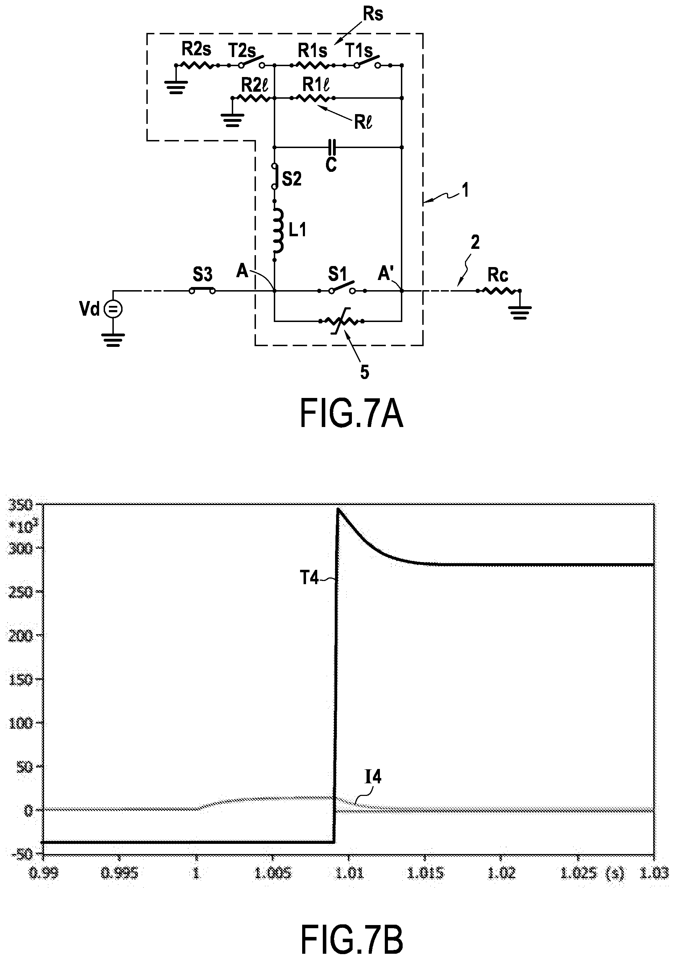

L'étape suivante illustrée aux **Fig. 7A-7B** illustre la décharge du banc de condensateurs **C** dans le disjoncteur mécanique **S1**. A cet effet, l'enclencheur **S2** est commandé en fermeture pour assurer la décharge du banc de condensateurs dans le circuit formé par l'inductance **L1** et le disjoncteur mécanique **S1** de manière à créer un courant oscillant à haute fréquence qui se superpose au courant de défaut traversant le disjoncteur mécanique **S1**. Bien entendu, le courant oscillant ainsi créé doit présenter une première valeur crête qui est supérieure au courant de défaut à éliminer.

L'amplitude du courant oscillant Ip est tel que :

$$I_p = Uch \cdot \sqrt{\frac{C}{L}}$$

La fréquence du courant oscillant est tel que :

$$f = \frac{1}{2\pi\sqrt{L \cdot C}}$$

La puissance dissipée par un diviseur est tel que :

$$P = \frac{U^2}{R1 + R2}$$

Le courant par diviseur est tel que : $I = \dfrac{U}{R1 + R2}$

La tension aux bornes du banc de condensateurs est tel que :

$$Uch = U \cdot \frac{R1}{R1 + R2}$$

La constante de temps de charge est tel que :

$$Tau = \frac{R1 \cdot R2}{R1 + R2} \cdot C$$

Il est ainsi possible en fixant les grandeurs de tension et du courant oscillant, de déterminer les valeurs des résistances des diviseurs résistifs de tension **Rs**, **Rl**, de l'inductance **L1** et de la capacité du banc de condensateurs.

Si par exemple, la valeur du courant de défaut est égale 16 kA alors les composants du disjoncteur sont choisis afin que la valeur crête du courant oscillant atteigne 20 kA.

Il doit donc être compris que le courant passant par le disjoncteur mécanique **S1** présente un passage par zéro de sorte que ce disjoncteur mécanique **S1** est à même d'éliminer un tel courant de défaut. Le disjoncteur mécanique **S1** ouvre alors la branche **A-A'** du réseau.

Compte tenu de l'ouverture de la branche du disjoncteur mécanique **S1**, le courant contourne cette branche et peut passer dans le circuit formé par l'inductance **L1** et le banc de condensateurs **C**. Le banc de condensateurs se trouve donc à être chargé par le réseau de sorte que sa tension augmente comme le montre la courbe **T4** sur la **Fig. 7B**.

Toutefois, il est à noter que le parafoudre **5** est connecté aux bornes du banc de condensateurs **C**. Le parafoudre **5** écrête ainsi la tension du banc de condensateurs à une valeur donnée de sorte que le courant ne passe plus dans le banc de condensateur **C** mais dans la branche du parafoudre **5**. La tension du banc de condensateurs vient alors se stabiliser sensiblement à la tension du réseau. Le parafoudre **5** écoule donc le courant et absorbe l'énergie de sorte que le courant dans la ligne devient nulle (courbe de courant **I4** de la **Fig. 7B**). Le disjoncteur **1** conforme à l'invention a réalisé l'opération de coupure éliminant le courant de défaut.

L'opération suivante consiste à décharger le banc ce condensateurs **C** dont la tension a atteint la valeur de tension du réseau de manière que ce banc de condensateurs puisse être réinitialisé c'est-à-dire rechargé à sa valeur pour produire le courant de décharge oscillant souhaité.

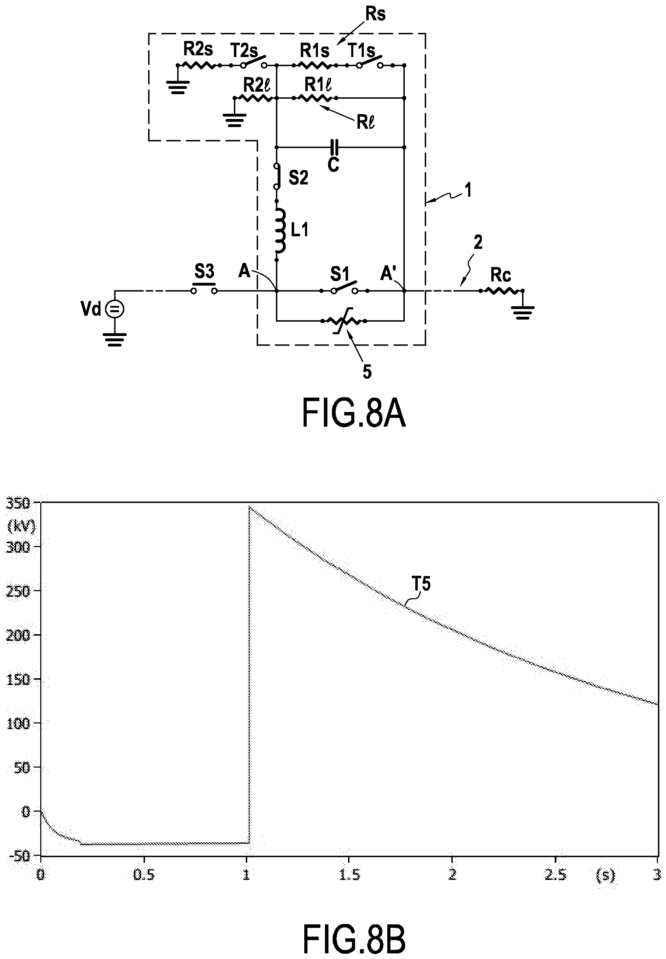

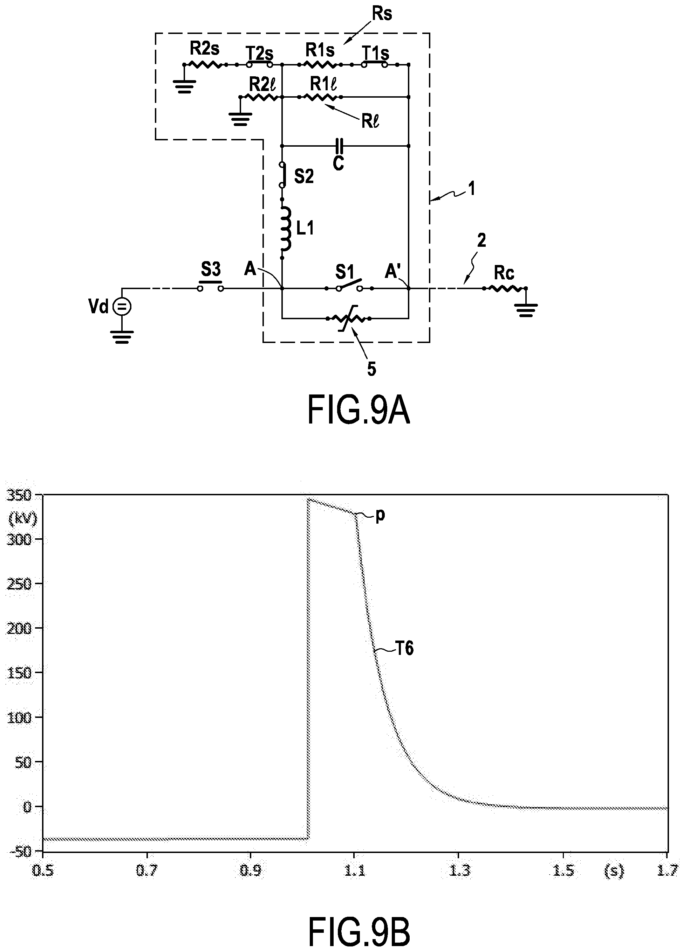

Les **Fig. 8A-8B** et **9A-9B** illustrent cette opération de décharge du banc de condensateurs **C** qui est réalisé en deux phases. D'abord, le commutateur **S3** est commandé en ouverture de sorte que le banc de condensateurs **C** est déchargé avec la constante de temps du deuxième diviseur résistif de tension **RI** (**Fig**. **8A**). Pour rappel, la constante de temps du deuxième diviseur résistif de tension **RI** est relativement longue de sorte que la vitesse de décharge est relativement lente comme cela apparaît sur la courbe **T5** de la **Fig. 8B** montrant la tension du banc de condensateurs.

Ensuite, comme illustré à la **Fig. 9A**, les interrupteurs **T1s** et **T2s** sont commandés en fermeture pour connecter le premier diviseur résistif de tension **Rs** aux bornes du banc de condensateurs **C**. Ainsi, le banc de condensateurs **C** se décharge avec la constante de temps du premier diviseur résistif de tension **Rs**. Pour rappel, la constante de temps du premier diviseur résistif de tension **Rs** est relativement courte de sorte que la vitesse de décharge est relativement rapide comme cela apparaît sur la courbe **T6** de la **Fig. 9B** montrant la tension du banc de condensateurs. Le point **P** sur la courbe **T6** correspond au passage entre la décharge par le deuxième diviseur résistif de tension **RI** et la décharge par le premier diviseur résistif de tension **Rs.**

Une fois le courant de défaut éliminé et le banc de condensateurs **C** déchargé ou en cours de décharge, l'enclencheur **S2** est ouvert avant de fermer le disjoncteur mécanique **S1** et le commutateur **S3** monté en série avec ledit disjoncteur mécanique **S1**. Comme expliqué en relation des **Fig. 3A** et **3B**, le banc de condensateurs **C** se charge rapidement et l'ouverture des interrupteurs **T1s** et **T2s** permet de maintenir la charge du banc de condensateurs **C** (**Fig. 4A-4B**)

Le disjoncteur **1** selon l'invention, après chargement du banc de condensateurs est de nouveau prêt pour assurer une nouvelle opération de coupure lors de l'apparition d'un courant de défaut. Les différentes étapes décrites ci-dessus sont renouvelées.

Il ressort de la description qui précède que le disjoncteur **1** selon l'invention n'a pas besoin d'une source de tension auxiliaire, ce qui augmente sa fiabilité et diminue son coût. Par ailleurs, la tension de charge du banc de condensateurs atteint une valeur de quelques dizaines de kV, très éloignée de la valeur permanente du réseau, ce qui favorise le vieillissement du banc de condensateurs. De même, l'enclencheur **S2** travaille également à une valeur de quelques dizaines de kV, et non pas à la valeur du réseau, y compris pendant la phase de coupure. Cet enclencheur **S2** peut donc présenter un faible coût en étant réalisé par exemple, par un éclateur commandé (fast triggered gap en anglais), une pile de thyristors ou une pile de transistors bipolaires à grille isolée (IGBT acronyme en anglais).

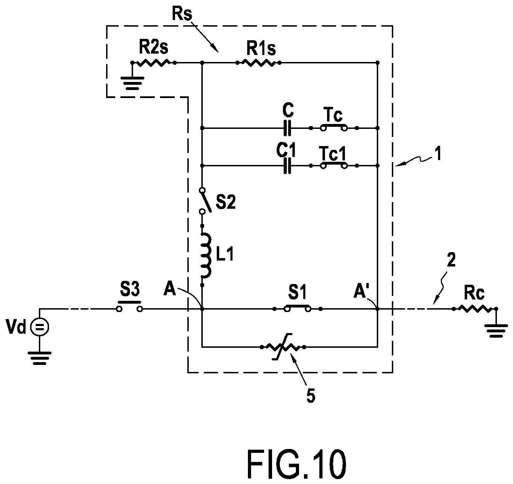

La **Fig. 10** illustre une deuxième variante de réalisation d'un disjoncteur **1** conforme à l'invention permettant d'assurer deux opérations de coupure successives dans un délai très court, typiquement, inférieur à 100 ms. Selon la variante de réalisation illustrée sur les dessins, le disjoncteur **1** comporte un seul diviseur résistif de tension **Rs** comme dans l'exemple illustré à la **Fig. 1**, mais un deuxième banc de condensateurs **C1** disposé en parallèle du premier banc de condensateurs **C**. Le deuxième banc de condensateurs **C1** est donc connecté en parallèle avec l'étage basse tension **R1s** du diviseur résistif de tension **Rs** et présente une capacité électrique identique à celle du premier banc de condensateur **C**.

Les premier et deuxième bancs de condensateurs sont chacun montés en série avec un interrupteur respectivement **Tc, Tc1**.

Le fonctionnement de de cette deuxième variante de réalisation est identique dans son principe, au fonctionnement de la première variante décrite en détail en relation des **Fig. 3A** à **9A**. Une différence concerne la charge des deux bancs de condensateurs qui est réalisée simultanément à travers un seul diviseur résistif de tension **Rs** ou de deux diviseurs résistifs parallèles **Rs** et **RI**. Par ailleurs, lors de l'apparition d'un premier courant de défaut, l'interrupteur **Tc** du premier banc de condensateurs est commandé en fermeture pour décharger le premier banc de condensateurs afin de produire un passage par zéro du courant circulant dans la branche du disjoncteur mécanique. Lors du ré-enclenchement du disjoncteur, si le défaut est toujours présent, le disjoncteur mécanique **S1** est réouvert puis l'interrupteur **Tc1** monté en série avec le deuxième banc de condensateurs **C1** est commandé en fermeture pour décharger le deuxième banc de condensateurs afin de produire un passage par zéro du courant circulant dans la branche du disjoncteur mécanique.

Le disjoncteur **1** selon l'invention permet ainsi que la charge d'au moins un banc de condensateurs se fasse simplement à travers au moins un diviseur résistif de tension, par le convertisseur ou le réseau haute tension. A cet égard, il est à noter que dans l'exemple illustré à la **Fig. 1**, l'enclencheur **S2** et l'étage haute tension **R2s** sont situés du côté réseau alors que dans les autres exemples de réalisation illustrés, l'enclencheur **S2** et l'étage haute tension **R2s** sont situés du côté convertisseur. Bien entendu, l'enclencheur **S2** et l'étage haute tension **R2s** peuvent être situés soit du côté convertisseur soit du côté réseau.

Le disjoncteur **1** selon l'invention comporte un circuit de commande de l'enclencheur **S2** et du commutateur **S3**, réalisé de toute manière appropriée. D'une manière générale, ce circuit de commande assure d'une part après l'ouverture du disjoncteur mécanique **S1**, la fermeture rapide de l'enclencheur **S2** pour assurer la production du courant oscillant et d'autre part, l'ouverture du commutateur **S3** placé en série avec le disjoncteur **1**, afin de réinitialiser la charge du banc de condensateurs pour être prêt pour une opération de coupure ultérieure. Ce circuit de commande permet également, une fois le courant de défaut éliminé et le banc de condensateurs déchargé, l'ouverture de l'enclencheur **S2** et la fermeture du commutateur **S3** placé en série avec le disjoncteur **1**.

**Revendications**

1. Disjoncteur pour un réseau à courant continu haute ou moyenne tension, comportant une branche (**A-A'**) avec un disjoncteur mécanique (**S1**) inséré dans la ligne du réseau et en parallèle de laquelle sont montés d'une part, une branche à parafoudre (**5**), et d'autre part, en série, un premier banc de condensateurs (**C**), un enclencheur (**S2**) et une inductance (**L1**), l'enclencheur (**S2**) assurant lors de l'apparition d'un courant de défaut, la décharge à travers l'inductance (**L1**), du banc de condensateurs afin de créer un courant oscillant et produire un passage par zéro du courant circulant dans la branche du disjoncteur mécanique, **caractérisé en ce qu'**il comporte au moins un premier diviseur résistif de tension (**Rs**) relié à la tension du réseau et présentant un étage basse tension (**R1s**) connecté en parallèle avec le banc de condensateurs (**C**) pour charger le banc de condensateurs.

2. Disjoncteur selon la revendication 1, **caractérisé en ce que** le premier diviseur résistif de tension (**Rs**) présente avec le banc de condensateurs, une constante de temps de charge inférieure à 100 ms.

3. Disjoncteur selon les revendications 1 ou 2, **caractérisé en ce que** le premier diviseur résistif de tension (**Rs**) présente un ratio entre l'étage haute tension (**R2s**) et l'étage basse tension (**R1s**) compris entre 0,05 et 0,25.

4. Disjoncteur selon l'une des revendications 1 à 3, **caractérisé en ce qu'**il comprend un deuxième diviseur résistif de tension (**RI**) relié à la tension du réseau et présentant un étage basse tension (**R2I**) connecté en parallèle avec le banc de condensateurs (**C**), la résistance électrique de l'étage basse tension (**R1s**) du premier diviseur (**Rs**) étant inférieure à la résistance électrique de l'étage basse tension (**R1I**) du deuxième diviseur (**RI**) avec le ratio de division du premier diviseur résistif de tension (**Rs**) étant égal au ratio du deuxième diviseur résistif de tension (**RI**), les étages du premier diviseur (**Rs**) comportant des interrupteurs (**T1s, T2s**) commandés d'une part, en fermeture pour assurer la charge rapide du banc de condensateurs et d'autre part, en ouverture après chargement, afin que le deuxième diviseur (**RI**) assure le maintien de la charge du banc de condensateurs.

5. Disjoncteur selon l'une des revendications 1 à 4, **caractérisé en ce qu'**il comprend une branche avec un deuxième banc de condensateurs (**C1**) connectée en parallèle avec l'étage basse tension (**R1s**) du premier diviseur résistif de tension et présentant une capacité électrique identique à celle du premier banc de condensateur (**C**), les premier et deuxième bancs de condensateurs (**C, C1**) étant chacun montés en série avec un interrupteur (**Tc, Tc1**) dont l'un est commandé en fermeture pour décharger le banc de condensateurs associé afin de produire un passage par zéro du courant circulant dans la branche du disjoncteur mécanique, lors de l'apparition d'un courant de défaut et dont l'autre interrupteur est commandé en fermeture pour décharger le banc de condensateurs associé afin de produire un passage par zéro du courant circulant dans la branche du disjoncteur mécanique, en cas de réenclenchement sur défaut.

6. Disjoncteur selon l'une des revendications 1 à 5, **caractérisé en ce qu'**il comprend un système pour décharger le banc de condensateurs, après la suppression du courant de défaut.

7. Disjoncteur selon la revendication 6, **caractérisé en ce qu'**il comprend en tant que système pour décharger le banc de condensateurs, les interrupteurs (**T1s, T2s**) du premier diviseur résistif et l'étage haute tension de ce premier diviseur, ces interrupteurs étant commandés en fermeture pour assurer la décharge du banc de condensateurs.

8. Disjoncteur selon l'une des revendications 1 à 7, **caractérisé en ce qu'**il comporte un circuit de commande de l'enclencheur (**S2**) et d'un commutateur (**S3**) assurant d'une part, après l'ouverture du disjoncteur mécanique (**S1**), la fermeture rapide de l'enclencheur (**S2**) pour assurer la production du courant oscillant, et d'autre part, l'ouverture du commutateur (**S3**) afin de réinitialiser la charge du banc de condensateurs pour être prêt pour une opération de coupure ultérieure.

## Patentansprüche

1. Trennschalter für ein Mittel- oder Hochspannungsgleichstromnetz, umfassend einen Zweig (A-A') mit einem mechanischen Trennschalter (S1), der in die Leitung des Netzes eingefügt ist, und mit dem einerseits ein Blitzschutz-Zweig (5) parallel und andererseits eine erste Kondensatorbank (C), ein Einschalter (S2) und eine Induktivität (L1) in Reihe geschaltet sind, wobei der Einschalter (S2) beim Auftreten eines Fehlerstroms das Entladen durch die Induktivität (L1) der Kondensatorbank gewährleistet, um einen oszillierenden Strom zu erzeugen und einen Nulldurchgang des Stroms zu erzeugen, der in dem Zweig des mechanischen Trennschalters fließt, **dadurch gekennzeichnet, dass** er mindestens einen ersten resistiven Spannungsteiler (Rs) aufweist, der an die Spannung des Netzes angeschlossen ist und eine Niederspannungsstufe (R1s) aufweist, die mit der Kondensatorbank (C) parallel geschaltet ist, um die Kondensatorbank zu laden.

2. Trennschalter nach Anspruch 1, **dadurch gekennzeichnet, dass** der erste resistive Spannungsteiler (Rs) mit der Kondensatorbank eine Ladezeitkonstante aufweist, die kleiner als 100 ms ist.

3. Trennschalter nach Anspruch 1 oder 2, **dadurch gekennzeichnet, dass** der erste resistive Spannungsteiler (Rs) ein Verhältnis zwischen der Hochspannungsstufe (R2s) und der Niederspannungsstufe (R1s) aufweist, das zwischen 0,05 und 0,25 liegt.

4. Trennschalter nach einem der Ansprüche 1 bis 3, **dadurch gekennzeichnet, dass** er einen zweiten resistiven Spannungsteiler (RI) aufweist, der an die Spannung des Netzes angeschlossen ist und eine Niederspannungsstufe (R1I) aufweist, die mit der Kondensatorbank (C) parallel geschaltet ist, wobei der elektrische Widerstand der Niederspannungsstufe (R1s) des ersten Spannungsteilers (Rs) niedriger als der elektrische Widerstand der Niederspannungsstufe (R1I) des zweiten Spannungsteilers (RI) ist, wobei das Teilungsverhältnis des ersten resistiven Spannungsteilers (Rs) gleich dem Verhältnis des zweiten resistiven Spannungsteilers (RI) ist, wobei die Stufen des ersten Spannungsteilers (Rs) Schalter (T1s, T2s) aufweisen, die einerseits beim Schließen gesteuert werden, um das schnelle Laden der Kondensatorbank zu gewährleisten und andererseits beim Öffnen nach dem Laden, damit der zweite Teiler (RI) das Halten der Ladung der Kondensatorbank gewährleistet.

5. Trennschalter nach einem der Ansprüche 1 bis 4, **dadurch gekennzeichnet, dass** er einen Zweig mit einer zweiten Kondensatorbank (C1) aufweist, die mit der Niederspannungsstufe (R1s) des ersten resistiven Spannungsteilers parallel geschaltet ist und eine elektrische Kapazität aufweist, die mit jener der ersten Kondensatorbank (C) identisch ist, wobei die erste und die zweite Kondensatorbank (C, C1) jeweils mit einem Schalter (Tc, Tc1) in Reihe geschaltet sind, wovon einer beim Schließen gesteuert wird, um die verbundene Kondensatorbank zu entladen, um beim Auftreten eines Fehlerstroms einen Nulldurchgang des Stroms zu erzeugen, der in dem Zweig des mechanischen Trennschalters fließt, und wovon der andere Schalter beim Öffnen gesteuert wird, um die verbundene Kondensatorbank zu entladen, um im Falle von Wiedereinschalten bei einem Fehler einen Nulldurchgang des Stroms zu erzeugen, der in dem Zweig des mechanischen Trennschalters fließt.

6. Trennschalter nach einem der Ansprüche 1 bis 5, **dadurch gekennzeichnet, dass** er ein System zum Entladen der Kondensatorbank nach dem Löschen des Fehlerstroms aufweist.

7. Trennschalter nach Anspruch 6, **dadurch gekennzeichnet, dass** er als System zum Entladen der Kondensatorbank die Schalter (T1s, T2s) des ersten resistiven Spannungsteilers und die Hochspannungsstufe dieses ersten Teilers aufweist, wobei diese Schalter beim Schließen gesteuert werden, um das Entladen der Kondensatorbank zu gewährleisten.

8. Trennschalter nach einem der Ansprüche 1 bis 7, **dadurch gekennzeichnet, dass** er einen Steuerkreis des Einschalters (S2) und eines Wechselschalters (S3) aufweist, der einerseits nach dem Öffnen des mechanischen Trennschalters (S1) das schnelle Schließen des Einschalters (S2) gewährleistet, um das Erzeugen des oszillierenden Stroms zu gewährleisten, und andererseits das Öffnen des Wechselschalters (S3), um das Laden der Kondensatorbank zurückzusetzen, um für einen weiteren Abschaltvorgang bereit zu sein.

## Claims

1. Circuit breaker apparatus for a high-or medium-voltage direct current network, the circuit breaker apparatus comprising a branch (A-A') with a mechanical circuit breaker (S1) inserted in the network line, and, connected in parallel therewith, firstly a lightning arrestor (5) branch, and secondly a series connection of a first capacitor bank (C), a make switch (S2), and an inductor (L1), the make switch (S2) acting on the appearance of a fault current to discharge the capacitor bank through the inductor (L1) so as to create an oscillating current and produce a zero crossing in the current flowing in the mechanical circuit breaker branch, the circuit breaker apparatus being **characterized in that** it includes at least one resistive voltage divider (Rs) connected to the network voltage and presenting a low voltage stage (R1s) connected in parallel with the capacitor bank (C) in order to charge the capacitor bank.

2. Circuit breaker apparatus according to claim 1, **characterized in that** the first resistive voltage divider (Rs) together with the capacitor bank presents a charging time constant shorter than 100 ms.

3. Circuit breaker apparatus according to claim 1 or claim 2, **characterized in that** the first resistive voltage divider (Rs) presents a ratio between the high voltage stage (R2s) and the low-voltage stage (R1s) lying in the range 0.05 to 0.25.

4. Circuit breaker apparatus according to any one of claims 1 to 3, **characterized in that** it includes a second resistive voltage divider (Rℓ) connected to the network voltage and presenting a low voltage stage (R1ℓ) connected in parallel with the capacitor bank (C), the resistance of the low-voltage stage (R1s) of the first divider (Rs) being less than the resistance of the low-voltage stage (R1ℓ) of the second divider (Rℓ), with the division ratio of the first resistive voltage divider (Rs) being equal to the ratio of the second resistive voltage divider (Rℓ), the stages of the first divider (Rℓ) including controlled switches (T1s, T2s) that are caused firstly to close in order to charge the capacitor bank quickly, and secondly to open after charging in order to enable the second divider (Rℓ) to maintain the charge of the capacitor bank.

5. Circuit breaker apparatus according to any one of claims 1 to 4, **characterized in that** it includes a branch with a second capacitor bank (C1) connected in parallel with the low-voltage stage (R1s) of the first resistive voltage divider and presenting capacitance identical to the capacitance of the first capacitor bank (C), the first and second capacitor banks (C, C1) each being connected in series with a respective controlled switch (Tc, Tc1), one of which is caused to close on the appearance of a fault current in order to discharge the associated capacitor bank so as to produce a zero crossing in the current flowing through the mechanical circuit breaker branch, and the other of which is caused to close in the event of re-closing on a fault in order to discharge the associated capacitor bank so as to produce a zero crossing in the current flowing in the mechanical circuit breaker branch.

6. Circuit breaker apparatus according to any one of claims 1 to 5, **characterized in that** it includes a system for discharging the capacitor bank, after eliminating the fault current.

7. Circuit breaker apparatus according to claim 6, **characterized in that** as a system for discharging the capacitor bank, it includes the controlled switches (T1s, T2s) of the first resistive divider and the high voltage stage of that first divider, the controlled switches being caused to close in order to discharge the capacitor bank.

8. Circuit breaker apparatus according to any one of claims 1 to 7, **characterized in that** it includes a control circuit for the make switch (S2) and for an isolating switch (S3) serving firstly, after opening of the mechanical circuit breaker (S1), to close the make switch (S2) quickly in order to produce the oscillating current, and secondly to open the isolating switch (S3) in order to reinitialize charging of the capacitor bank so as to be ready for a subsequent circuit breaking operation.

**FIG.1**

**FIG.2**

**FIG.3A**

**FIG.3B**

FIG.4A

FIG.4B

FIG.5A

FIG.5B

FIG.6A

FIG.6B

FIG.7A

FIG.7B

FIG.8A

FIG.8B

FIG.9A

FIG.9B

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012100831 A

- CN 10333785

**Littérature non-brevet citée dans la description**

- HVDC breakers for HVDC grid applications. AORC Technical Meeting 2014. Mitsubishi, vol. B4-1120

- Development and interrupting tests on 250 kV 8kA HVDC circuit breaker. *IEEE Transactions on Power Apparatus Systems,* 1985